# EUROPÄISCHE PATENTSCHRIFT

(11) **EP 3 089 299 B1**
(45) Veröffentlichungstag und Bekanntmachung des Hinweises auf die Patenterteilung: **08.06.2022**
(21) Anmeldenummer: 16166297.8
(22) Anmeldetag: 21.04.2016
(51) Int. Cl.: H02H 1/00, H02H 3/00, H02H 3/52

(54) **BRANDSCHUTZSCHALTER ZUR ERKENNUNG VON STÖRLICHTBÖGEN**
FIRE PROTECTION SWITCH FOR IDENTIFYING ARCING FAULTS
DISJONCTEUR DE PROTECTION ANTI-FEU DESTINE A LA RECONNAISSANCE D'ARCS ELECTRIQUES PARASITES

(30) Priorität: 30.04.2015 DE 102015208035; 10.12.2015 DE 102015224807
(43) Veröffentlichungstag der Anmeldung: 02.11.2016
(60) Teilanmeldung: 22151535.6
(73) Patentinhaber: Siemens Aktiengesellschaft, 80333 München (DE)
(72) Erfinder: Dhanraj, Vinod Gideon, 93059 Regensburg (DE); Festl, Florian, 93051 Regensburg (DE); Hueber, Alexander, 84085 Niederleierndorf (DE); Martel, Jean-Mary, 93105 Tegernheim (DE); Saunders, James, 93059 Regensburg (DE)

(56) Entgegenhaltungen:
- US-A1- 2008 091 308
- US-B1- 8 599 523
- US-B2- 7 864 492
- None

## Beschreibung

Die Erfindung betrifft einen Brandschutzschalter zur Erkennung von Störlichtbögen in einem elektrischen Stromkreis nach Patentanspruch 1 Anspruch 18 betrifft ein Verfahren zum Betrieb des Brandschutzschalters.

Brandschutzschalter sind relativ neuartige Schutzeinrichtungen für Stromkreise bzw. Spannungsnetze, insbesondere für Niederspannungsstromkreise bzw. Niederspannungsnetze, d.h. für Spannungen bis zu 1000 Volt Wechselspannung oder 1500 Volt Gleichspannung. Brandschutzschalter dienen zum Erkennen von Störlichtbögen, wie parallele oder serielle Lichtbögen, in einem Stromkreis bzw. elektrischem Netz. Störlichtbögen sind insbesondere Lichtbögen, die durch Fehler in elektrischen Stromkreisen erzeugt werden. Solche Störlichtbögen können durch schlecht geklemmte elektrische Verbindungen in Verteilerdosen oder Steckdosen entstehen. Brandschutzschalter können insbesondere in Hausinstallationseinrichtungen, wie Sicherungskästen, eingesetzt werden, um derartige Fehler zu erkennen und bei vorliegen eines Fehlers den elektrischen Stromkreis zu unterbrechen.

Brandschutzschalter verwenden verschiedene Prinzipien zur Ermittlung von Störlichtbögen. Ein Prinzip ist die Messung des Frequenzspektrums in einem elektrischen Stromkreis, d.h. auf der elektrischen Leitung. Hierbei werden die hochfrequenten Signale bzw. Signalanteile im Stromkreis respektive auf der elektrischen Leitung ermittelt. Mit hochfrequenten Signalen bzw. Signalanteilen sind Signale mit einer Frequenz ab 30 KHz gemeint. Es können aber auch Signale ab einer höheren Frequenz ermittelt werden, wie z.B. ab 50 KHz, 100 KHz, 300KHz, 500 KHz, 800 KHz, 1 MHz, 1,5 MHZ, 2 MHz, usw. Jede Frequenzgrenze ist hier möglich. Mit Hilfe der ermittelten hochfrequenten Signale können Störlichtbögen im elektrischen Stromkreis ermittelt werden.

Dazu weisen Brandschutzschalter einen Sensor zur Ermittlung der hochfrequenten Signale im elektrischen Stromkreis auf; einen Mischer, der aus den ermittelten hochfrequenten Signalen und einer von einem Oszillator erzeugten, festen Oszillatorfrequenz, durch Mischung, d.h. Multiplikation, ein Zwischenfrequenzsignal erzeugt; einen Analog-Digital-Umsetzer, der das Zwischenfrequenzsignal in ein Digitalsignal umsetzt; einen Prozessor, der das Digitalsignal hinsichtlich Störlichtbögen auswertet und ein Signal zur Unterbrechung des elektrischen Stromkreises im Falle der Ermittlung von Störlichtbögen ausgibt.

Die Störlichtbogenerkennung im hochfrequenten Bereich ist gegenüber Störungen in diesem Bereich empfindlich. Insbesondere hochfrequente Störungen, wie hochfrequentes Rauschen, können eine Erkennung von Störlichtbögen erschweren. Hochfrequente Störungen können dabei von angeschlossenen Verbrauchern bzw. Geräten kommen, wie beispielsweise technisch einfach aufgebaute (häufig kostengünstige) Schaltnetzteile, Power-Line-Communications-Module, usw. Dadurch können die hochfrequenten Störungen an jedem Einsatzort des Brandschutzschalters unterschiedlich sein. Erzeugt ein angeschlossenes Gerät hochfrequente Störungen im Bereich, in dem Störlichtbögen ermittelt werden sollen, wird die Erkennung von Störlichtbögen erschwert bzw. im Extremfall unmöglich.

Hinzu kommt, dass die hochfrequenten Signale der Störlichtbögen vom Entstehungsort zum Detektionsort, d.h. dort wo sich der Brandschutzschalter befindet, durch die dazwischenliegenden Leitungen, parallele Abzweigungen und angeschlossene Verbraucher gedämpft werden. Diese Dämpfung hängt von der Leitungslänge, der Frequenz, der Abzweiglänge und der angeschlossenen Last des Verbrauchers ab. Die Dämpfung von Störlichtbögen ist folglich an jedem Einsatzort des Brandschutzschalters unterschiedlich.

In der amerikanischen Patentschrift US 7 864 492 B2 werden ein System und Verfahren zur Erkennung von Fehlerlichbögen auf Energieleitungen beansprucht. Das Verfahren kann das Überwachen von einer Energieleitung zugeordneten Leistungssignalen und das Filtern der Leistungssignale umfassen, um ein Hochfrequenzsignal und ein Niederfrequenzsignal zu erzeugen. Ein Maskierungssignal kann basierend auf dem Niederfrequenzsignal erzeugt werden, und das Hochfrequenzsignal kann analysiert werden, um einen Breitbandabschnitt des Hochfrequenzsignals zu extrahieren. Ein Fehlerzähler kann inkrementiert werden, wenn die Größe der Breitbandanteile näherungsweise größer als ein erster Schwellwertpegel ist. Ein Fehlerzähler kann dekrementiert werden, wenn die Größe des Breitbandabschnitts ungefähr kleiner als der erste Schwellwertpegel ist. Ein Auslösesignal wird an eine der Versorgungsleitung zugeordnete Schalteinrichtung bereitgestellt, wenn der Störungszähler eine vorgegebene Fehlergrenze überschreitet.

In der amerikanischen Patentanmeldung US 2008/0091308 A1 werden eine Einrichtung, ein System und ein Verfahren für die adaptive HF-Erkennung für die Feherllichtbogenerkennung beansprucht. Ausführungen umfassen ein Verfahren, das automatisch ein Ausgangssignal in Reaktion auf ein Eingangssignal erzeugen kann. Das Eingangssignal kann einen Fehlerlichtbogen anzeigen. Das Ausgangssignal kann so konfiguriert werden, dass ein elektrischer Schaltkreis geöffnet wird. Das Ausgangssignal kann in Abhängigkeit von einem abgeleiteten Signal basierend auf einem ersten Schwellenwert mit einer ersten Amplitude erzeugt werden.

In der amerikanischen Patentschrift US 8 599 523 B1 wird ein Fehlerlichbogenunterbrecher offenbart. Dieser Lichtbogenfehler-Schaltkreisunterbrecher kann einen oder mehrere von drei verschiedenen Sensoren, wie einen Hochfrequenzsensor, und einen beliebigen von Niederfrequenzsensoren, wie einen Stromsensor oder einen Differentialsensor, umfassen. Der Lichtbogenfehler-Schaltkreisunterbrecher kann als im Stromkreis angeordneter Lichtbogen-Fehlerstromkreisunterbrecher konfiguriert werden, der in einer Wanddose installiert ist. Zusätzlich kann der Lichtbogenfehler-Schaltkreisunterbrecher einen Prozessor umfassen, der konfiguriert ist, um einen beliebigen Serienlichtbogenfehler oder parallelen Lichtbogenfehler zu bestimmen.

Aufgabe der vorliegenden Erfindung ist es, einen Brandschutzschalter der eingangs genannten Art zu verbessern.

Diese Aufgabe wird durch einen Brandschutzschalter mit den kennzeichnenden Merkmalen des Patentanspruchs 1 sowie ein Verfahren mit den Merkmalen des Patentanspruchs 18 gelöst.

Erfindungsgemäß ist vorgesehen, dass die Frequenz des Oszillatorsignals veränderbar ausgestaltet ist. D.h. der Oszillator als frequenzveränderlicher Oszillator ausgestaltet ist, mit einem Steuereingang zur Frequenzänderung, der mit dem Prozessor verbunden ist, und
der Prozessor derart ausgestaltet ist, dass bei Überschreitung eines ersten Grenzwertes des Digitalsignales die Oszillatorfrequenz geändert wird. Dadurch kann beim Vorliegen von hochfrequenten Störungen im elektrischen Stromkreis, d.h. eine Störung erzeugt ein Signal, das im Brandschutzschalter nach der internen Verarbeitung als Digitalsignal vorliegt, das einen vorher festgelegten Grenzwert überschreitet, eine Änderung der verwendeten Frequenz zur Ermittlung von Störlichtbögen durchgeführt werden. Dadurch wird die Ermittlung von Störlichtbögen verbessert. Ferner können Frequenzen zur Störlichtbogenermittlung verwendet werden, bei denen die Dämpfung für Störlichtbögen im Leitungsnetz gering ist. Vorteilhafte Ausgestaltungen der Erfindung sind in den Unteransprüchen angegeben.

In einer vorteilhaften Ausgestaltung der Erfindung ist der erste Grenzwert des Digitalsignals ein Amplitudengrenzwert. Dies hat den besonderen Vorteil, dass eine besonders einfache Auswertung des Digitalsignals lediglich hinsichtlich der Überschreitung von Amplitudengrenzwerten erfolgt. Dadurch kann die Frequenz zur Ermittlung von Störlichtbögen gewählt werden, wo hochfrequente Störungen gering sind.

In einer vorteilhaften Ausgestaltung der Erfindung ist der Prozessor ein digitaler Signalprozessor. Dadurch ist eine besonders effektive Realisierung möglich, da der digitale Signalprozessor in Echtzeit Aufgaben der Signalverarbeitung und Auswertung vornehmen kann.

In einer vorteilhaften Ausgestaltung der Erfindung ist der Sensor durch mindestens einen Kondensator gebildet ist, der einerseits mit dem elektrischen Stromkreis und andererseits mit dem bzw. in Richtung Mischer verbunden ist. Dies hat den besonderen Vorteil, dass gleichzeitig eine galvanische Trennung vom elektrischen Stromkreis ermöglicht wird.

In einer vorteilhaften Ausgestaltung der Erfindung ist der Oszillator ein spannungsgesteuerter Oszillator oder ein Phasenregelkreis. Dies hat den besonderen Vorteil, dass eine einfache Realisierung mit Standardkomponenten ermöglicht wird.

In einer vorteilhaften Ausgestaltung der Erfindung ist zwischen Sensor und Mischer ein erster Verstärker zur Verstärkung des ermittelten hochfrequenten Signals geschaltet. Dies hat den besonderen Vorteil, dass die Selektivität des ermittelten hochfrequenten Signals verbessert wird.

In einer vorteilhaften Ausgestaltung der Erfindung ist zwischen Mischer und Analog-Digital-Umsetzer ein zweiter Verstärker zur Verstärkung des Zwischenfrequenzsignals geschaltet. Dies hat den besonderen Vorteil, dass eine bessere Selektivität zur Ermittlung von Störlichtbögen erzielt wird.

In einer vorteilhaften Ausgestaltung der Erfindung ist der zweite Verstärker ein Verstärker mit logarithmischer Kennlinie. Dies hat den besonderen Vorteil, dass die Auswertung des Digitalsignals erleichtert wird.

In einer vorteilhaften Ausgestaltung der Erfindung ist der frequenzveränderliche Oszillator durch eine Zusammenschaltung eines Festfrequenzoszillators mit einem Frequenzteiler und/oder einem Frequenzvervielfacher realisiert ist, wobei der Frequenzteiler und/oder Frequenzvervielfacher zwischen den Ausgang des Festfrequenzoszillators und dem Eingang des Mischers zwischenschaltbar ausgeführt sind, so dass mittels eines Steuersignals verschiedene Oszillatorfrequenzen erzeug- und schaltbar sind. Dies hat den besonderen Vorteil, dass mit einfachen Komponenten verschiedene Frequenzen erzeugbar sind.

In einer vorteilhaften Ausgestaltung der Erfindung ist zwischen jeweils zwei der vorgenannten Einheiten jeweils ein Filter und/oder weitere(r) Verstärker geschaltet sind. Dies hat den besonderen Vorteil, dass die Frequenzselektivität und/oder Empfindlichkeit verbessert wird.

In einer vorteilhaften Ausgestaltung der Erfindung ist der Prozessor derart ausgestaltet, dass ein Programm abläuft, dass bei Überschreiten des ersten Grenzwertes des Digitalsignals die Oszillatorfrequenz so lange geändert wird, bis der erste Grenzwert unterschritten wird, wobei die Frequenzen schrittweise geändert werden. Dies hat den besonderen Vorteil, dass schnell eine neue Frequenz zur Ermittlung von Störlichtbögen gefunden werden kann.

In einer vorteilhaften Ausgestaltung der Erfindung ist der Prozessor derart ausgestaltet ist, dass ein Programm abläuft, dass bei Überschreiten des ersten Grenzwertes des Digitalsignals die Oszillatorfrequenz so lange geändert wird, bis der erste Grenzwert unterschritten wird, wobei die Frequenzen kontinuierlich geändert werden. Dies hat den besonderen Vorteil, dass kontinuierlich nach störungsfreien Frequenzen zur Ermittlung von Störlichtbögen gesucht werden kann.

In einer vorteilhaften Ausgestaltung der Erfindung ist der Prozessor derart ausgestaltet, dass ein Programm abläuft, dass der Prozessor den Oszillator von seiner tiefsten bis zu seiner höchsten Oszillatorfrequenz steuert und dazu gemessene Amplitudenwerte des Digitalsignals aufzeichnet,
aus den aufgezeichneten frequenzabhängigen Amplitudenwerten wird der mit der kleinsten Amplitude ermittelt und der Oszillator auf der zugehörigen Oszillatorfrequenz einstellt,
um mit dieser Oszillatorfrequenz Störlichtbögen zu ermitteln. Dies hat den besonderen Vorteil, dass das gesamte Frequenzspektrums durchfahren wird und Frequenzen bzw. mindestens eine Frequenz, die besonders frei von hochfrequenten Störungen ist, für die Ermittlung von Störlichtbögen verwendet werden kann.

Alle Ausgestaltungen der Erfindung verbessern die Erkennung von Störlichtbögen durch die Ermittlung von störungsfreien Frequenzen zur Störlichtbogenerkennung, insbesondere in einem elektrischen Niederspannungs-Netz.

Werden nach dem erfindungsgemäßen Verfahren mehrere störungsfreie Frequenzen zur Ermittlung von Störlichtbögen verwendet, kann auch die Wahrscheinlichkeit verringert werden, dass Störlichtbögen im Netz auf der gerade verwendeten Frequenz zu stark gedämpft werden, da auf den anderen verwendeten Frequenzen die Dämpfung geringer ist. D.h. die Erkennung von Störlichtbögen wird verbessert.

Das Problem der Dämpfung tritt weniger bei niedrigen Frequenzen auf, allerdings sind hier Störungen stärker vorherrschend. Hohe Frequenzen haben weniger Störungen, allerdings ist hier die Dämpfung im Stromkreis bzw. Netz größer.

Ein Ausführungsbeispiel der Erfindung wird im Folgenden an Hand der Zeichnung näher erläutert. Dabei zeigt:
Fig 1 ein Blockschaltbild eines erfindungsgemäßen Brandschutzschalters
Fig 2 ein Blockschaltbild eines weiteren erfindungsgemäßen Brandschutzschalters
Fig 3 eine Darstellung von Signalen im Frequenzbereich in einem elektrischen Stromkreis

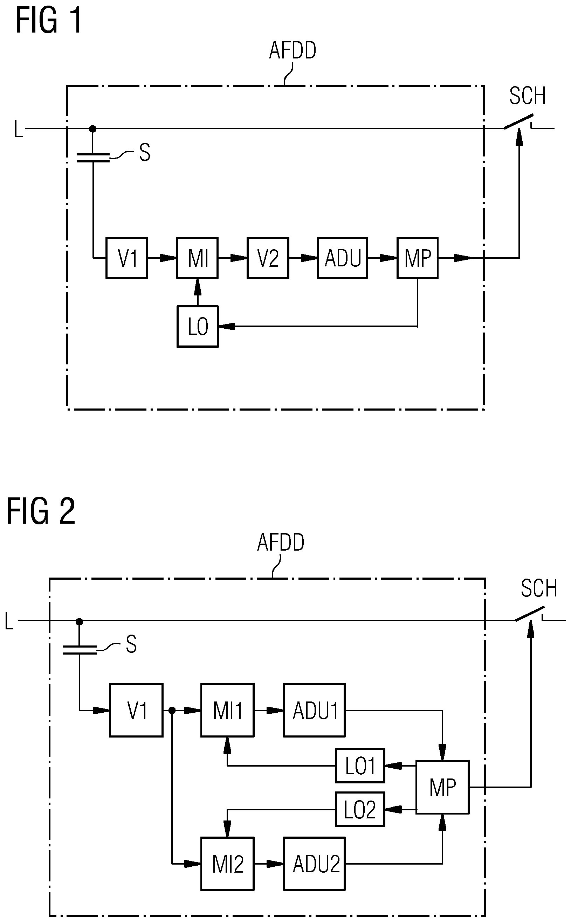

Fig 1 zeigt einen Brandschutzschalter AFDD der mit mindestens einen Leiter L eines elektrischen Stromkreises in Verbindung steht. Am Leiter L ist ein Sensor S, der beispielsweise als elektrischer Kondensator ausgeführt ist, angeschlossen. Der Sensor S ist mit einem, wahlweise einzusetzenden, ersten Verstärker V1 verbunden, der wiederum mit einem Mischer MI verbunden ist. Der Ausgang des Mischers MI ist mit einem, wahlweise einzusetzenden, zweiten Verstärker V2 verbunden, der wiederum mit einem Analog-Digital-Umsetzer ADU verbunden ist. Der Analog-Digital-Umsetzer ADU ist mit einem Prozessor MP verbunden, an dessen Ausgang eine Schalteinheit SCH zur Unterbrechung des elektrischen Stromkreises angeschaltet ist. Die Schalteinheit SCH kann sich beispielsweise außerhalb des Brandschutzschalters AFDD befinden. Ebenso ist eine interne Schalteinheit möglich. Der Sensor S kann sich ebenfalls außerhalb des Brandschutzschalters AFDD befinden.

Der zweite Ausgang des Prozessors MP ist mit dem Eingang des Oszillators LO verbunden, dessen Ausgang mit dem zweiten Eingang des Mischers MI verbunden ist.

Zwischen den einzelnen Einheiten S, V1, MI, V2, ADU, MP und LO können noch weitere Filter FI oder/und Verstärker VX geschaltet sein.

Der Sensor S ermittelt hochfrequente Signale im elektrischen Stromkreis, im Beispiel auf der elektrischen Leitung L. Alternativ auch zwischen zwei oder mehreren Leitungen des elektrischen Stromkreises, beispielsweise in einem Einphasen, Zweiphasen, oder Dreiphasen-Stromkreis bzw. -Netz.

Die hochfrequenten Signale des Sensors S können gefiltert oder/und verstärkt werden, beispielsweise durch einen ersten Verstärker V1. Die hochfrequenten Signale gelangen weiter zum Mischer MI, der sie mit einem Oszillatorsignal des Oszillators LO mischt, d.h. multipliziert, so dass ein Zwischenfrequenzsignal entsteht. Das Oszillatorsignal kann beispielsweise ein sinusförmiges Signal sein. Alternativ kann es auch ein rechteckförmiges Signal sein. Der Oszillator kann auch im Prozessor MP enthalten sein. Alternativ kann auch der Prozessor MP ein Oszillatorsignal abgeben, beispielsweise ein rechteckförmiges Oszillatorsignal, dass dem Mischer MI zugeführt wird.

Das Zwischenfrequenzsignal kann wiederum gefiltert oder/und verstärkt werden, beispielsweise mit einem zweiten Verstärker V2. Dieser kann beispielsweise als Verstärker mit einer logarithmischen Kennlinie ausgeführt sein.

Das Zwischenfrequenzsignal wird mittels des Analog-Digital-Umsetzers ADU vom analogen in den digitalen Bereich umgesetzt, so dass ein Digitalsignal erzeugt wird. Dieses wird dem Prozessor MP zugeführt und hier hinsichtlich des Vorliegens von Störlichtbögen durch bekannte Verfahren ausgewertet.

Erfindungsgemäß ist nun vorgesehen, dass bei Überschreiten gewisser Grenzwerte, beispielsweise Amplitudengrenzwerte, bevorzugt im Falle des Nichtvorliegens von Störlichtbögen, durch den Prozessor MP mit Hilfe des frequenzveränderlichen Oszillator LO dessen Oszillatorsignal so lange verändert wird, bis der Grenzwert unterschritten wird. Mit dieser Frequenz wird nun die Analyse hinsichtlich Störlichtbögen durchgeführt. Alternativ kann auch der Prozessor selbst das Oszillatorsignal ändern und abgeben, beispielweise ein Rechtecksignal mit geänderter Pulsfrequenz.

Erfindungsgemäß können auch parallel mehrere derartiger Anordnungen verwendet werden, beispielsweise mehrere Mischer MI mit jeweils zugeordneten Oszillatoren LO und mehreren Analog-Digital-Umsetzern ADU und gegebenenfalls Filtern FI und Verstärkern VX, wobei beispielsweise mehrerer solcher Digitalsignale durch einen Prozessor MP hinsichtlich Störlichtbögen ausgewertet werden. Der Prozessor MP kann jeweils die Oszillatorfrequenzen der parallelen Anordnungen einzeln steuern.

Eine solche Variante ist in Figur 2 dargestellt. Figur 2 zeigt eine Darstellung gemäß Figur 1, mit dem Unterschied, dass das hochfrequente Signal des Sensors S, vorzugsweise durch den ersten Verstärker V1 verstärkt, einem ersten Mischer MI1 und einem zweiten Mischer MI2 zugeführt wird. Das durch den ersten Mischer MI1 erzeugte erste Zwischenfrequenzsignal kann gefiltert und/oder verstärkt werden und wird durch einen ersten Analog-Digital-Umsetzer ADU1 dem Mikroprozessor MP zugeführt. In analoger Weise wird das durch den zweiten Mischer MI2 erzeugte zweite Zwischenfrequenzsignal, dass ebenfalls gefiltert und/oder verstärkt werden kann, durch einen zweiten Analog-Digital-Umsetzer ADU2 dem Mikroprozessor MP zugeführt. Der Mikroprozessor MP weist Ausgänge für einen ersten Oszillator L01 und einen zweiten Oszillator L02 auf, wobei das Ausgangssignal des ersten Oszillator L01 dem ersten Mischer MI1 und das Ausgangssignal des zweiten Oszillators L02 dem zweiten Mischer MI2 zugeführt wird.

Damit können parallel zwei Frequenzen bzw. Frequenzbereiche hinsichtlich Störlichtbögen überwacht werden. In analoger Weise können durch analoge Erweiterung der Anordnung drei oder mehr Frequenzen bzw. Frequenzbereiche parallel überwacht werden. Die Frequenzeinstellung kann dabei unabhängig voneinander durch den Mikroprozessor mittels der Oszillatoren erfolgen.

Der Mischer kann als Mischer, dem ein Rechtecksignal als Oszillatorfrequenz zugeführt wird, ausgestaltet sein. Das Rechtecksignal könnte beispielsweise an Stelle des Oszillators LO direkt vom Prozessor MP erzeugt werden. Das Rechtecksignal kann beispielsweise ein durch den Mikroprozessor erzeugtes Pulsweitensignal sein.

Der frequenzveränderliche Oszillator LO, L01, L02 kann auch im Mikroprozessor enthalten sein bzw. durch den Mikroprozessor realisiert sein, in dem dieser direkt ein Oszillatorsignal für den Mischer, beispielsweise ein Rechtecksignal, abgibt.

Der Prozessor MP kann derart ausgestaltet sein, dass ein Programm abläuft, dass bei Überschreiten des ersten Grenzwertes des Digitalsignals die Frequenz des Oszillatorsignals so lange geändert wird, bis der erste Grenzwert unterschritten wird, wobei die Frequenzen schrittweise geändert werden.

Alternativ können die Frequenzen auch kontinuierlich geändert werden.

Des Weiteren kann der Prozessor MP derart ausgestaltet sein, dass ein Programm abläuft, dass der Prozessor den Oszillator (LO) von seiner tiefsten bis zu seiner höchsten Frequenz steuert und dazu gemessene Amplitudenwerte des Digitalsignals aufzeichnet. Aus den aufgezeichneten frequenzabhängigen Amplitudenwerten den mit der kleinsten Amplitude ermittelt und den Oszillator (LO) auf der zugehörigen Frequenz des Oszillators einstellt, um mit dieser Frequenz des Oszillatorsignals Störlichtbögen zu ermitteln.

Alternativ kann der Prozessor den Oszillator (LO) auch von seiner höchsten bis zu seiner tiefsten Frequenz steuern.

Ferner kann ein Frequenzbereich auch mehrfach durchfahren werden.

Alternativ auch immer wieder zyklisch, um Frequenzen mit den geringsten Störungen bzw. Rauschen zu finden.

Im Folgenden soll die Erfindung noch mal erläutert werden. Die erfindungsgemäße Einrichtung kann die Frequenz bzw. den Frequenzbereich zur Erkennung von Störlichtbögen während des Betriebes verändern, indem eine andere Detektionsfrequenz gewählt wird, wenn große Rausch- oder Störpegel im zu überwachenden bzw. schützenden elektrischen Stromkreis auftreten. Wenn zum Beispiel Powerline Kommunikation erkannt wird, kann durch die Erfindung eine Frequenz verwenden bzw. darauf umschalten, die von PLC nicht verwendet wird.

Wesentlich ist, dass zumindest ein frequenzveränderliches Oszillatorsignal vorliegt und ein Mischer, um ein Zwischenfrequenzsignal, dass zur Auswertung von Störlichtbögen verwendet wird, zu ändern.

Das frequenzveränderliche Oszillatorsignal kann beispielsweise durch einen spannungsgesteuerten Oszillator, eine Phase-Locked-Loop-Schaltung oder einen Synthesizer erzeugt werden. Im Falle eines rechteckförmigen Oszillatorsignals kann auch ein Pulsweitensignal Verwendung finden, dass direkt vom Prozessor MP erzeigt wird. Ferner können auch Frequenzteiler oder Frequenzverdoppler zwischen einem Oszillator und dem Mischer MI geschaltet sein, um Oszillatorsignale mit unterschiedlichen Frequenzen zu erzeugen. Hierzu können Flip-Flops verwendet werden.

Wird ein System mit zwei oder mehreren Mischern, Oszillatoren und Analog-Digital-Umsetzern eingesetzt, können zwei oder mehr Frequenzen bzw. Frequenzbereiche überwacht werden. Dabei können die verwendeten Frequenzen unabhängig voneinander geändert werden. Dadurch kann die Chance erhöht werden, Störlichtbögen zu erkennen.

Alternativ kann auch mit dem ersten Oszillatorsignal auf einer Frequenz eine Störlichtbogenerkennung erfolgen, während die Frequenz des zweiten Oszillatorsignals geändert wird, beispielsweise kontinuierlich geändert wird, um geeignete Frequenzen für eine Störlichtbogenerkennung zu finden.

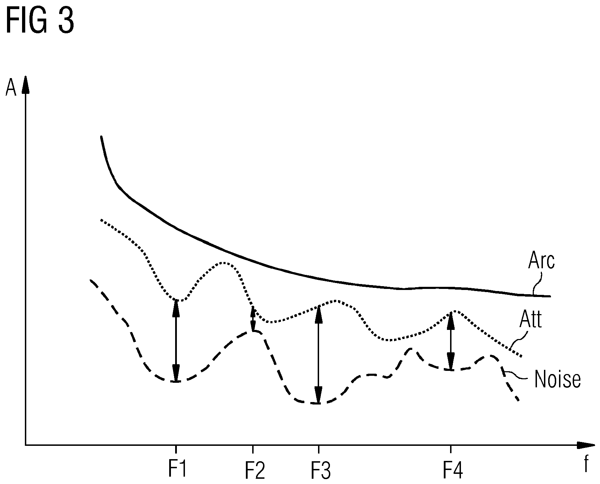

Fig 3 zeigt eine Darstellung von Signalen im Frequenzbereich in einem elektrischen Stromkreis. Die Darstellung zeigt einen Ausschnitt aus einem Koordinatensystem, wobei auf der horizontalen Achse die Frequenz f (in Hertz) aufgetragen ist und auf der vertikalen Achse ein frequenzabhängige Amplitudenwert, beispielsweise ein elektrischer Spannungswert abgebildet ist. Ein erster Signalverlauf Arc, der durch eine durchgezogene Linie dargestellt ist, zeigt den frequenzabhängigen Amplitudenwert eines Störlichtbogens, beispielsweise am Entstehungsort des Störlichtbogens. Ein zweiter Signalverlauf Att, der durch eine punktierte Linie dargestellt ist, zeigt den gedämpften frequenzabhängigen Amplitudenwert des ersten Signalverlaufs Arc, der beispielsweise durch Leitungen, Abzweige etc. frequenzabhängig abgeschwächt bzw. gedämpft ist. Ein dritter Signalverlauf Noise, der durch eine gestrichelte Linie dargestellt ist, zeigt den frequenzabhängigen Amplitudenwert des auf der elektrischen Leitung vorhandenen Rauschens, das viele Ursachen haben kann, wie thermisches Rauschen, so genanntes man-made Rauschen, atmosphärisches Rauschen usw.

Ferner dargestellt sind Bereiche bzw. Frequenzen F1, F2, F3, F4. In der Bereichen F1 und F3 ist das Rauschen gering, wodurch gedämpfte Störlichtbogen gut detektiert werden können. In den Bereichen F2 und F4 ist das Rauschen auf der Leitung hoch, wodurch gedämpfte Störlichtbögen im elektrischen Stromkreis nur schlecht detektiert werden können.

Unterschreitet das auf der elektrischen Leitung vorhandene Rauschen bestimmte Grenzwerte, beispielsweise frequenzabhängige Grenzwerte, wird bevorzugt hier eine Detektion von Störlichtbögen durchgeführt. Frequenzbereiche, bei denen das Rauschen bestimmte Grenzwerte überschreitet, werden erfindungsgemäß nicht verwendet.

## Patentansprüche

1. Brandschutzschalter (AFDD) zur Erkennung von Störlichtbögen in einem elektrischen Stromkreis, aufweisend:
einen Sensor (S) zur Ermittlung von hochfrequenten Signalen im elektrischen Stromkreis,
einen ersten Oszillator (LO, LO1) zur Erzeugung eines ersten Oszillatorsignals,
einen ersten Mischer (MI, MI1) zur Erzeugung eines ersten Zwischenfrequenzsignals aus den ermittelten hochfrequenten Signalen und dem ersten Oszillatorsignal,
einen ersten Analog-Digital-Umsetzer (ADU, ADU1) zur Umsetzung des Zwischenfrequenzsignals in ein ersten Digitalsignal,
einen Prozessor (MP) zur Auswertung des ersten Digitalsignals hinsichtlich Störlichtbögen und Ausgabe eines Signales zur Unterbrechung des elektrischen Stromkreises im Falle der Ermittlung von Störlichtbögen,
**dadurch gekennzeichnet,**
**dass** der erste Oszillator als frequenzveränderlicher Oszillator ausgestaltet ist, mit einem Steuereingang zur Frequenzänderung, der mit dem Prozessor (MP) verbunden ist, und
der Prozessor (MP) derart ausgestaltet ist, dass bei Überschreitung eines ersten Grenzwertes des ersten Digitalsignales die Frequenz des ersten Oszillatorsignals geändert wird, bis der erste Grenzwert unterschritten wird.

2. Brandschutzschalter nach Anspruch 1,
**dadurch gekennzeichnet,**
**dass** ein zweiter Oszillator (LO2) zur Erzeugung einer zweiten Oszillatorsignals,
ein zweiter Mischer (MI2) zur Erzeugung eines zweiten Zwischenfrequenzsignals aus den ermittelten hochfrequenten Signalen und dem zweiten Oszillatorsignals,
ein zweiter Analog-Digital-Umsetzer (ADU2) zur Umsetzung des zweiten Zwischenfrequenzsignals in ein zweites Digitalsignal vorgesehen ist und
dem Prozessor (MP) zur Auswertung hinsichtlich Störlichtbögen das erste und das zweite Digitalsignal zugeführt wird,
sowie der erste (LO1) und der zweite (LO2) Oszillator als frequenzveränderliche Oszillatoren ausgestaltet sind, mit je einem Steuereingang zur Frequenzänderung, die jeweils mit dem Prozessor verbunden sind.

3. Brandschutzschalter nach Anspruch 2,
**dadurch gekennzeichnet,**
**dass** der Prozessor derart ausgestaltet ist, dass bei Überschreitung eines ersten Grenzwertes des ersten Digitalsignales die Frequenz des ersten Oszillatorsignals geändert wird sowie bei Überschreitung eines ersten Grenzwertes des zweiten Digitalsignales die Frequenz des zweiten Oszillatorsignals geändert wird.

4. Brandschutzschalter nach einem der vorhergehenden Patentansprüche,
**dadurch gekennzeichnet,**
**dass** der erste Grenzwert des Digitalsignals ein Amplitudengrenzwert ist.

5. Brandschutzschalter nach einem der vorhergehenden Patentansprüche,
**dadurch gekennzeichnet,**
**dass** der Prozessor (MP) ein digitaler Signalprozessor ist.

6. Brandschutzschalter nach einem der vorhergehenden Patentansprüche,
**dadurch gekennzeichnet,**
**dass** der Sensor (S) durch mindestens einen Kondensator gebildet ist, der einerseits mit dem elektrischen Stromkreis und andererseits mit dem bzw. in Richtung Mischer verbunden ist.

7. Brandschutzschalter nach einem der vorhergehenden Patentansprüche,
**dadurch gekennzeichnet,**
**dass** der Oszillator (LO) ein spannungsgesteuerter Oszillator oder ein Phasenregelkreis ist.

8. Brandschutzschalter nach einem der vorhergehenden Patentansprüche,
**dadurch gekennzeichnet,**
**dass** zwischen Sensor (S) und Mischer (MI) ein erster Verstärker (V1) zur Verstärkung des ermittelten hochfrequenten Signals geschaltet ist.

9. Brandschutzschalter nach einem der vorhergehenden Patentansprüche,
**dadurch gekennzeichnet,**
**dass** zwischen Mischer (MI) und Analog-Digital-Umsetzer (ADU) ein zweiter Verstärker (V2) zur Verstärkung des Zwischenfrequenzsignals geschaltet ist.

10. Brandschutzschalter nach einem der vorhergehenden Patentansprüche,
**dadurch gekennzeichnet,**
**dass** der frequenzveränderliche Oszillator (LO) durch eine Zusammenschaltung eines Festfrequenzoszillators mit einem Frequenzteiler und/oder einem Frequenzvervielfacher realisiert ist, wobei der Frequenzteiler und/oder Frequenzvervielfacher zwischen den Ausgang des Festfrequenzoszillators und dem Eingang des Mischers zwischenschaltbar ausgeführt sind, so dass mittels eines Steuersignals verschiedene Frequenzen des Oszillatorsignals erzeug- und schaltbar sind.

11. Brandschutzschalter nach einem der vorhergehenden Patentansprüche,
**dadurch gekennzeichnet,**
**dass** zwischen jeweils zwei der vorgenannten Einheiten jeweils ein Filter (FI) und/oder weitere(r) Verstärker (VX) geschaltet sind.

12. Brandschutzschalter nach einem der vorhergehenden Patentansprüche,
**dadurch gekennzeichnet,**
**dass** der Prozessor (MP) derart ausgestaltet ist, dass ein Programm abläuft, dass bei Überschreiten des ersten Grenzwertes des Digitalsignals die Frequenz des Oszillatorsignals so lange geändert wird, bis der erste Grenzwert unterschritten wird, wobei die Frequenzen schrittweise geändert werden.

13. Brandschutzschalter nach einem der Patentansprüche 1 bis 11,
**dadurch gekennzeichnet,**
**dass** der Prozessor (MP) derart ausgestaltet ist, dass ein Programm abläuft, dass bei Überschreiten des ersten Grenzwertes des Digitalsignals die Frequenz des Oszillatorsignals so lange geändert wird, bis der erste Grenzwert unterschritten wird, wobei die Frequenzen kontinuierlich geändert werden.

14. Brandschutzschalter nach einem der Patentansprüche 1 bis 11 und 13
**dadurch gekennzeichnet,**
**dass** der Prozessor (MP) derart ausgestaltet ist, dass ein Programm abläuft,
**dass** der Prozessor den Oszillator (LO) von seiner tiefsten bis zu seiner höchsten Frequenz steuert und dazu gemessene Amplitudenwerte des Digitalsignals aufzeichnet,
aus den aufgezeichneten frequenzabhängigen Amplitudenwerten den mit der kleinsten Amplitude ermittelt und den Oszillator (LO) auf der zugehörigen Frequenz des Oszillators einstellt, um mit dieser Frequenz des Oszillatorsignals Störlichtbögen zu ermitteln.

15. Brandschutzschalter nach einem der vorhergehenden Patentansprüche,
**dadurch gekennzeichnet,**
**dass** das Oszillatorsignal ein sinusförmiges Signal ist.

16. Brandschutzschalter nach einem der vorhergehenden Patentansprüche 1 bis 14,
**dadurch gekennzeichnet,**
**dass** das Oszillatorsignal ein rechteckförmiges Signal ist.

17. Brandschutzschalter nach Patentanspruch 9,
**dadurch gekennzeichnet,**
**dass** der zweite Verstärker (V2) ein Verstärker mit logarithmischer Kennlinie ist.

18. Verfahren für einen Brandschutzschalter (AFDD), bei dem hochfrequente Signale in einem elektrischen Stromkreis ermittelt werden, diese mit einem Oszillatorsignal zu einem Zwischenfrequenzsignal gemischt werden, das Zwischenfrequenzsignal in ein Digitalsignal umgesetzt wird, das hinsichtlich des Vorliegens von Störlichtbögen untersucht wird,
**dadurch gekennzeichnet,**
**dass** bei Überschreiten eines ersten Grenzwertes des Digitalsignals die Frequenz des Oszillatorsignals so lange geändert wird, bis der erste Grenzwert unterschritten wird.

19. Verfahren nach Patentanspruch 18,
**dadurch gekennzeichnet,**
**dass** das Oszillatorsignal von seiner tiefsten bis zu seiner höchsten Frequenz verändert wird, dazu gemessene Amplitudenwerte des Digitalsignals aufgezeichnet werden,
aus den aufgezeichneten frequenzabhängigen Amplitudenwerten der mit der kleinsten Amplitude ermittelt wird und mit der zugehörigen Frequenz des Oszillatorsignals Störlichtbögen ermittelt werden.

20. Verfahren nach Patentanspruch 18 oder 19,
**dadurch gekennzeichnet,**
**dass** die Ermittlung von Störlichtbögen mit mehreren Frequenzen des Oszillatorsignals parallel erfolgt.

## Claims

1. Arc fault detection device (AFDD) for detecting arc faults in an electrical circuit, having:
a sensor (S) for identifying high-frequency signals in the electrical circuit,
a first oscillator (LO, LO1) for generating a first oscillator signal,
a first mixer (MI, MI1) for generating a first intermediate frequency signal from the identified high-frequency signals and the first oscillator signal,
a first analogue-to-digital converter (ADU, ADU1) for converting the intermediate frequency signal to a first digital signal,
a processor (MP) for evaluating the first digital signal in respect of arc faults and outputting a signal for interrupting the electrical circuit if arc faults are identified,
**characterized**
**in that** the first oscillator is in the form of a variable frequency oscillator that comprises a control input for changing the frequency and is connected to the processor (MP), and
the processor (MP) is designed in such a way that, if a first limit value of the first digital signal is exceeded, the frequency of the first oscillator signal is changed until the first limit value is fallen below.

2. Arc fault detection device according to Claim 1,
**characterized**
**in that** a second oscillator (LO2) for generating a second oscillator signal,
a second mixer (MI2) for generating a second intermediate frequency signal from the identified high-frequency signals and the second oscillator signal, and
a second analogue-to-digital converter (ADU2) for converting the second intermediate frequency signal to a second digital signal are provided, and
the first and the second digital signal are supplied to the processor (MP) for evaluation in respect of arc faults,
and the first (LO1) and the second (LO2) oscillator are in the form of variable frequency oscillators that each comprise a control input for changing the frequency and are each connected to the processor.

3. Arc fault detection device according to Claim 2,
**characterized**
**in that** the processor is designed in such a way that, if a first limit value of the first digital signal is exceeded, the frequency of the first oscillator signal is changed and, if a first limit value of the second digital signal is exceeded, the frequency of the second oscillator signal is changed.

4. Arc fault detection device according to one of the preceding patent claims,
**characterized**
**in that** the first limit value of the digital signal is an amplitude limit value.

5. Arc fault detection device according to one of the preceding patent claims,
**characterized**
**in that** the processor (MP) is a digital signal processor.

6. Arc fault detection device according to one of the preceding patent claims,
**characterized**
**in that** the sensor (S) is formed by at least one capacitor that on the one hand is connected to the electrical circuit and on the other hand is connected to, or in the direction of, the mixer.

7. Arc fault detection device according to one of the preceding patent claims,
**characterized**
**in that** the oscillator (LO) is a voltage-controlled oscillator or a phase-locked loop.

8. Arc fault detection device according to one of the preceding patent claims,
**characterized**
**in that** a first amplifier (V1) for amplifying the identified high-frequency signal is connected between the sensor (S) and the mixer (MI).

9. Arc fault detection device according to one of the preceding patent claims,
**characterized**
**in that** a second amplifier (V2) for amplifying the intermediate frequency signal is connected between the mixer (MI) and the analogue-to-digital converter (ADU).

10. Arc fault detection device according to one of the preceding patent claims,
**characterized**
**in that** the variable frequency oscillator (LO) is realized by an interconnection of a fixed-frequency oscillator with a frequency divider and/or a frequency multiplier, wherein the frequency divider and/or the frequency multiplier is/are configured so as to be able to be interposed between the output of the fixed-frequency oscillator and the input of the mixer, with the result that different frequencies of the oscillator signal can be generated and switched by means of a control signal.

11. Arc fault detection device according to one of the preceding patent claims,
**characterized**
**in that** in each case a filter (FI) and/or further amplifier(s) (VX) is/are connected between in each case two of the above-mentioned units.

12. Arc fault detection device according to one of the preceding patent claims,
**characterized**
**in that** the processor (MP) is designed in such a way that a program runs such that, if the first limit value of the digital signal is exceeded, the frequency of the oscillator signal is changed until the first limit value is fallen below, wherein the frequencies are changed in a stepwise manner.

13. Arc fault detection device according to one of Patent Claims 1 to 11,
**characterized**
**in that** the processor (MP) is designed in such a way that a program runs such that, if the first limit value of the digital signal is exceeded, the frequency of the oscillator signal is changed until the first limit value is fallen below, wherein the frequencies are changed continuously.

14. Arc fault detection device according to one of Patent Claims 1 to 11 and 13,
**characterized**
**in that** the processor (MP) is designed in such a way that a program runs
such that the processor controls the oscillator (LO) from its lowest to its highest frequency and records amplitude values of the digital signal measured in the process,
identifies, out of the recorded frequency-dependent amplitude values, that one with the smallest amplitude, and sets the oscillator (LO) to the associated frequency of the oscillator so as to identify arc faults at this frequency of the oscillator signal.

15. Arc fault detection device according to one of the preceding patent claims,
**characterized**
**in that** the oscillator signal is a sinusoidal signal.

16. Arc fault detection device according to one of the preceding Patent Claims 1 to 14,
**characterized**
**in that** the oscillator signal is a square-wave signal.

17. Arc fault detection device according to Patent Claim 9, **characterized**
**in that** the second amplifier (V2) is an amplifier with a logarithmic characteristic curve.

18. Method for an arc fault detection device (AFDD), in which high-frequency signals are identified in an electrical circuit, these high-frequency signals are mixed with an oscillator signal to form an intermediate frequency signal, the intermediate frequency signal is converted to a digital signal that is examined for the presence of arc faults, **characterized**
**in that**, if a first limit value of the digital signal is exceeded, the frequency of the oscillator signal is changed until the first limit value is fallen below.

19. Method according to Patent Claim 18,
**characterized**
**in that** the oscillator signal is changed from its lowest to its highest frequency, amplitude values of the digital signal measured in the process are recorded, out of the recorded frequency-dependent amplitude values, that one with the smallest amplitude is identified, and arc faults are identified at the associated frequency of the oscillator signal.

20. Method according to Patent Claim 18 or 19,
**characterized**
**in that** arc faults are identified in parallel at a plurality of frequencies of the oscillator signal.

## Revendications

1. Disjoncteur de protection contre l'incendie (AFDD) destiné à la reconnaissance d'arcs électriques parasites dans un circuit de courant électrique, qui présente :
un capteur (S) qui est destiné à l'identification de signaux haute fréquence dans un circuit de courant électrique ;
un premier oscillateur (LO, LO1) qui est destiné à la génération d'un premier signal d'oscillateur ;
un premier mélangeur (MI, MI1) qui est destiné à la génération d'un premier signal à fréquence intermédiaire à partir des signaux haute fréquence qui ont été identifiés et à partir du premier signal d'oscillateur ;
un premier convertisseur analogique-numérique (ADU, ADU1) qui est destiné à la conversion du signal à fréquence intermédiaire en un premier signal numérique ;
un processeur (MP) qui est destiné à l'évaluation du premier signal numérique en ce qui concerne des arcs électriques parasites et à l'émission d'un signal destiné à la coupure du circuit de courant électrique dans le cas de l'identification d'arcs électriques parasites ;
**caractérisé**
**en ce que** le premier oscillateur est conçu sous la forme d'un oscillateur du type à fréquence variable, qui comprend une entrée de commande à des fins de modification de la fréquence, qui est reliée au processeur (MP) ; et
le processeur (MP) est conçu d'une manière telle que, dans le cas d'un dépassement vers le haut d'une première valeur limite du premier signal numérique, la fréquence du premier signal d'oscillateur est modifiée jusqu'à ce que la première valeur limite soit dépassée vers le bas.

2. Disjoncteur de protection contre l'incendie selon la revendication 1, **caractérisé en ce que** l'on prévoit :
un deuxième oscillateur (LO2) qui est destiné à la génération d'un deuxième signal d'oscillateur ;
un deuxième mélangeur (MI2) qui est destiné à la génération d'un deuxième signal à fréquence intermédiaire à partir des signaux haute fréquence qui ont été identifiés et à partir du deuxième signal d'oscillateur ;
un deuxième convertisseur analogique-numérique (ADU2) qui est destiné à la conversion du deuxième signal à fréquence intermédiaire en un deuxième signal numérique ; et
le premier et le deuxième signal numérique sont acheminés au processeur (MP) à des fins d'évaluation en ce qui concerne des arcs électriques parasites, et le premier (LO1) et le deuxième (LO2) oscillateur sont également conçus sous la forme d'oscillateurs du type à fréquence variable qui comprennent respectivement une entrée de commande à des fins de modification de la fréquence, qui sont respectivement reliées au processeur.

3. Disjoncteur de protection contre l'incendie selon la revendication 2, **caractérisé en ce que** l'on conçoit le processeur d'une manière telle que, lors d'un dépassement vers le haut d'une première valeur limite du premier signal numérique, la fréquence du premier signal d'oscillateur est modifiée, et, dans le cas d'un dépassement vers le haut d'une première valeur limite du deuxième signal numérique, la fréquence du deuxième signal d'oscillateur est modifiée.

4. Disjoncteur de protection contre l'incendie selon l'une quelconque des revendications précédentes, **caractérisé en ce que** la première valeur limite du signal numérique représente une valeur limite d'amplitude.

5. Disjoncteur de protection contre l'incendie selon l'une quelconque des revendications précédentes, **caractérisé en ce que** le processeur (MP) représente un processeur de signal numérique.

6. Disjoncteur de protection contre l'incendie selon l'une quelconque des revendications précédentes, **caractérisé en ce que** le capteur (S) est réalisé sous la forme d'au moins un condensateur qui est relié d'une part au circuit de courant électrique et d'autre part au mélangeur, respectivement dans la direction de ce dernier.

7. Disjoncteur de protection contre l'incendie selon l'une quelconque des revendications précédentes, **caractérisé en ce que** l'oscillateur (LO) représente un oscillateur commandé par tension ou un circuit boucle à verrouillage de phase.

8. Disjoncteur de protection contre l'incendie selon l'une quelconque des revendications précédentes, **caractérisé en ce qu'**un premier amplificateur (V1) est monté entre le capteur (S) et le mélangeur (MI) à des fins d'amplification du signal haute fréquence qui a été identifié.

9. Disjoncteur de protection contre l'incendie selon l'une quelconque des revendications précédentes, **caractérisé en ce qu'**un deuxième amplificateur (V2) est monté entre le mélangeur (MI) et le convertisseur analogique-numérique (ADU) à des fins d'amplification du signal à fréquence intermédiaire.

10. Disjoncteur de protection contre l'incendie selon l'une quelconque des revendications précédentes, **caractérisé en ce que** l'oscillateur du type à fréquence variable (LO) est réalisé par l'intermédiaire d'une interconnexion d'un oscillateur du type à fréquence fixe avec un diviseur de fréquence et/ou un multiplicateur de fréquence ; dans lequel le diviseur de fréquence et/ou le multiplicateur de fréquence est/sont réalisé(s) pour pouvoir entrer en interconnexion entre la sortie de l'oscillateur du type à fréquence fixe et l'entrée du mélangeur, d'une manière telle qu'au moyen d'un signal de commande, on peut générer et commuter différentes fréquences du signal d'oscillateur.

11. Disjoncteur de protection contre l'incendie selon l'une quelconque des revendications précédentes, **caractérisé en ce que** respectivement un filtre (F1) et/ou un ou plusieurs amplificateurs supplémentaires (VX) est/sont montés entre respectivement deux des unités mentionnées ci-dessus.

12. Disjoncteur de protection contre l'incendie selon l'une quelconque des revendications précédentes, **caractérisé en ce que** le processeur (MP) est conçu d'une manière telle qu'un programme est exécuté tel que, dans le cas d'un dépassement vers le haut de la première valeur limite du signal numérique, la fréquence du signal d'oscillateur est modifiée jusqu'au dépassement vers le bas de la première valeur limite ; dans lequel les fréquences sont modifiées de manière progressive.

13. Disjoncteur de protection contre l'incendie selon l'une quelconque des revendications 1 à 11, **caractérisé en ce que** le processeur (MP) est conçu d'une manière telle qu'un programme est exécuté tel que, dans le cas d'un dépassement vers le haut de la première valeur limite du signal numérique, la fréquence du signal d'oscillateur est modifiée jusqu'au dépassement vers le bas de la première valeur limite ; dans lequel les fréquences sont modifiées de manière continue.

14. Disjoncteur de protection contre l'incendie selon l'une quelconque des revendications 1 à 11 et 13, **caractérisé en ce que** le processeur (MP) est conçu d'une manière telle qu'un programme est exécuté tel que le processeur commande l'oscillateur (LO) depuis la fréquence la plus basse jusqu'à la fréquence la plus haute de ce dernier et enregistre à cet effet des valeurs d'amplitude du signal numérique, qui ont été mesurées ; identifie, à partir des valeurs d'amplitude enregistrées qui dépendent de la fréquence, celle qui possède la plus petite amplitude ; et règle l'oscillateur (LO) à la fréquence correspondante de l'oscillateur, dans le but d'identifier, avec cette fréquence du signal d'oscillateur, des arcs électriques parasites.

15. Disjoncteur de protection contre l'incendie selon l'une quelconque des revendications précédentes, **caractérisé en ce que** le signal d'oscillateur représente un signal de forme sinusoïdale.

16. Disjoncteur de protection contre l'incendie selon l'une quelconque des revendications précédentes 1 à 14, **caractérisé en ce que** le signal d'oscillateur représente un signal de forme rectangulaire.

17. Disjoncteur de protection contre l'incendie selon la revendication 9, **caractérisé en ce que** le deuxième amplificateur (V2) représente un amplificateur du type à caractéristique logarithmique.

18. Procédé destiné à un disjoncteur de protection contre l'incendie (AFDD), dans lequel on identifie des signaux haute fréquence dans un circuit de courant électrique, on les mélange avec un signal d'oscillateur afin d'obtenir un signal à fréquence intermédiaire, on convertit le signal à fréquence intermédiaire en un signal numérique qui est soumis à une analyse en ce qui concerne la présence d'arcs électriques parasites, **caractérisé en ce que**, dans le cas d'un dépassement vers le haut d'une première valeur limite du signal numérique, la fréquence du signal d'oscillateur est modifiée jusqu'au dépassement vers le bas de la première valeur limite.

19. Procédé selon la revendication 18, **caractérisée en ce que** l'on modifie le signal d'oscillateur à partir de sa fréquence la plus basse jusqu'à sa fréquence la plus haute ; on enregistre des valeurs d'amplitude du signal numérique qui ont été mesurées à cet effet ; on identifie, à partir des valeurs d'amplitude enregistrées qui dépendent de la fréquence, celle qui possède la plus petite amplitude ; et on identifie des arcs électriques parasites avec la fréquence correspondante du signal d'oscillateur.

20. Procédé selon la revendication 18 ou 19, **caractérisé en ce que** l'identification d'arcs électriques parasites a lieu en parallèle avec plusieurs fréquences du signal d'oscillateur.
